(19) **Europäisches Patentamt / European Patent Office / Office européen des brevets**

(11) **EP 2 068 493 B1**

(12) **EUROPEAN PATENT SPECIFICATION**

(45) Date of publication and mention of the grant of the patent:
**25.01.2012 Bulletin 2012/04**

(21) Application number: **07816949.7**

(22) Date of filing: **24.09.2007**

(51) Int Cl.:
*H04L 12/24* <sup>(2006.01)</sup>     *H04L 12/28* <sup>(2006.01)</sup>

(86) International application number:
**PCT/CN2007/070758**

(87) International publication number:
**WO 2008/040249 (10.04.2008 Gazette 2008/15)**

(54) **A METHOD AND SYSTEM FOR SELECTING RUN MODE**

VERFAHREN UND SYSTEM ZUR AUSWAHL DES RUN-MODUS

PROCÉDÉ ET SYSTÈME DE SÉLECTION D'UN MODE DE MARCHE

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **28.09.2006 CN 200610152769**

(43) Date of publication of application:
**10.06.2009 Bulletin 2009/24**

(73) Proprietor: **Huawei Technologies Co., Ltd.**
**Longgang District, Shenzhen**
**Guangdong 518129 (CN)**

(72) Inventors:
 • **LI, Ying**
  **District;Shenzhen,Guangdong 518129 (CN)**
 • **ZHOU, Jun**
  **District;Shenzhen,Guangdong 518129 (CN)**

(74) Representative: **Gulde Hengelhaupt Ziebig & Schneider**
**Patentanwälte - Rechtsanwälte**
**Wallstrasse 58/59**
**10179 Berlin (DE)**

(56) References cited:
 WO-A-2005/057315     CN-A- 1 602 039
 CN-A- 1 661 995     JP-A- 2005 236 812
 JP-A- 2005 328 486     US-A1- 2005 111 534
 US-A1- 2005 111 534     US-A1- 2006 198 430

 • "Very high speed digital subscriber line transceivers 2 (VDSL2); G.993.2 (02/06)" ITU-T DRAFT STUDY PERIOD 2005-2008, INTERNATIONAL TELECOMMUNICATION UNION, GENEVA ; CH, no. G.993.2 (02/06), 17 February 2006 (2006-02-17), XP017404696

**Description**

FIELD OF THE INVENTION

The present invention relates to the field of network communication, and more particularly, to a method and system for selecting an operation profile.

BACKGROUND

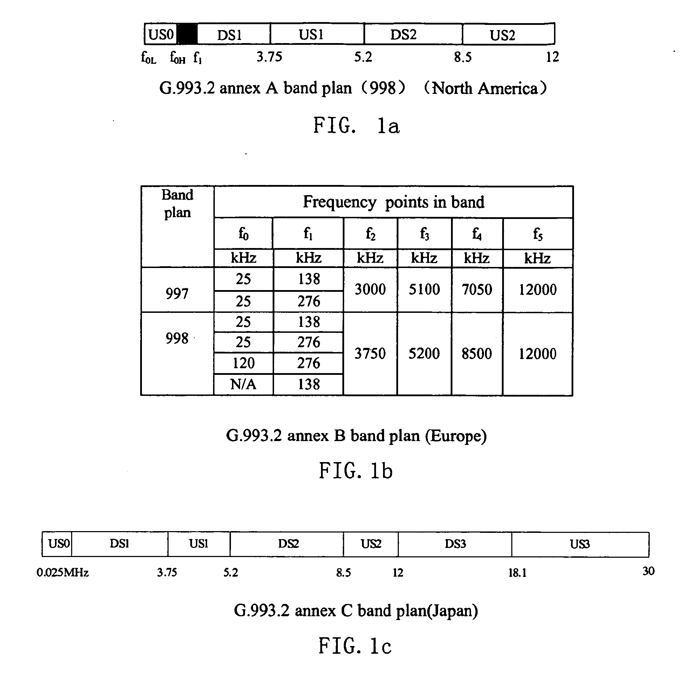

xDSL is a generic term for Digital Subscriber Line (DSL). A series of technology standards have been developed for xDSL, wherein the ITU-T standard family includes ADSL (Asymmetrical Digital Subscriber Line) (G.992.1/2), ADSL2 (second generation ADSL) (G.992.3), ADSL2+ (extend down stream bandwidth ADSL2) (G.992.5), SHDSL (Symmetrical High-speed Digital Subscriber Line) (G.991.2), VDSL (Very high bit rate digital subscriber line) (G.993.1), VDSL2 (second generation VDSL) etc. VDSL2 as the latest technology standard provides a symmetrical access rate up to 100Mbit/s and flexible measures for power spectrum control, and thus will play the advantage rule for the next generation twisted pairs access technology and may meet the requirement of various services for bandwidth in a long period. Lots of xDSL services, in particularly ADSL services, have been deployed previously, and as we know, VDSL2 have used the frequency band from 4KHz up to 30MHz, however within which there are so many other services such as ADSL, AM radio, and amateur radio service etc. Therefore, in order to coordinate these services, each region has made their own VDSL2 band plans, such as band plan 997, 998, China triband etc, according to the specific condition of their own region; meanwhile, different total aggregate power and power spectral density (PSD) profiles are designated for these band plans, as shown in Fig. 1.

Table 1 presents the corresponding relationship between PSD profiles and band plans extracted from G.993.2. From Table1, it can be seen that except for 8a, 8b and 8c, the maximum downstream total aggregate transmission power of all the profiles is 14.5dBm, while the maximum upstream total aggregate transmission power of all the profiles is 14.5dBm. Certainly, the PSDs will vary depending on the frequency bandwidths used. Normally, the higher the frequency bandwidth is, the lower the transmitter PSD. In handshake stage of VDSL, parameters such as band plan, profile etc., should be configured, which enables the VDSL modem be trained according to these configured parameters. While under many circumstances, the channel parameters can not be estimated well beforehand. For example, in case of that the line is very long and exceeds 800m, the frequency band over 8MHz is not applicable due to too strong attenuation. In this case, if 17a or even 30a is chosen, the performance will be decreased due to the lower PSD instead of being increased. Thus the line rate of VDSL tends to be lower if an improper profile is used.

There are two methods for selecting an operation profile in the prior art. The first method configures a set of line profiles composed of various parameters, where each of the line profiles includes a band plan, a PSD Mask or PSD Limit corresponding to the band plan and other parameters, where the PSD Limit may be a standard value or a customized value lower than the standard value. The system designates one of the above line profiles as the operation profile for the modem of each user. That is to say, once a user selects a profile, the training and static operation thereafter will be based on the selected profile, and the transmission PSD of the modem must meet the requirement of the profile at any time, that is, in a manner of fixed profile.

During design of the present invention, the inventor finds that the above method at least shows the following drawbacks.

Actual lines may vary significantly, therefore, using a profile designated for a line with the fixed profile technology may be not so proper because the bandwidth capacity may be not used fully.

The other method for selecting an operation profile estimates length of a line according to the attenuation of a set of handshake signals transmitted by xTU-R during handshake procedure (in fact the attenuation is estimated according to amplitude of the signal), and then selects an operation profile according to previous running status. For example, ADSL2+ is selected for a loop length less than 2.8km, ADSL2 for a loop length between 2.8km and 3.8km, and ADSL2 annex L for a loop length more than 3.8km.

Though this technical solution is simple and does not increase the time of the handshake procedure, the inventor fmds, during design of the present invention, that the method at least shows the following drawbacks.

The method for determining length of the line according to the upstream handshake signal and selecting a profile according to previous running status is rather unsophisticated that, since the measured attenuation of the upstream signals may not reliably indicate the attenuation in the downstream so as to deduce the capacity, it is often the case that the line rate of the selected profile is relatively low.

**Table 1**

| Band Plan | Parameter | Parameter value of profile | | | | | | | |
|---|---|---|---|---|---|---|---|---|---|
| | | 8a | 8b | 8c | 8d | 12a | 12b | 17a | 30a |
| All | Maximum downstream transmission power (dBm) | +17.5 | +20.5 | +11.5 | +14.5 | +14.5 | +14.5 | +14.5 | +14.5 |
| All | Minimum downstream transmission power (dBm) | For further study | For further study | For further study | For further study | For further study | For further study | For further study | For further study |
| All | Maximum upstream transmission power (dBm) | +14.5 | +14:5 | +14.5 | +14.5 | +14.5 | +14.5 | +14.5 | +14.5 |
| All | Minimum upstream transmission power (dBm) | For further study | For further study | For further study | For further study | For further study | For further study | For further study | For further study |
| All | Bandwidth of tone (kHz) | 4.3125 | 4.3125 | 4.3125 | 4.3125 | 4.3125 | 4.3125 | 4.3125 | 8.625 |
| All | Support to upstream band zero (US0) | Required | Required | Required | Required | Required | Not Required | Not required | Not required |
| All | Minimum bidirectional net data rate capability (Mbit/s) | 50 Mbit/s | 50 Mbit/s | 50 Mbit/s | 50 Mbit/s | 68 Mbit/s | 68 Mbit/s | 100 Mbit/s | 200 Mbit/s |

(continued)

| Band Plan | Parameter | Parameter value of profile | | | | | | | |
|---|---|---|---|---|---|---|---|---|---|
| | | 8a | 8b | 8c | 8d | 12a | 12b | 17a | 30a |
| Annex A, Annex B (998) | Highest downstream frequency (MHz) | 8.5 | 8.5 | 8.5 | 8.5 | 8.5 | 8.5 | N/A | N/A |
| | Highest upstream frequency (MHz) | 5.2 | 5.2 | 5.2 | 5.2 | 12 | 12 | N/A | N/A |
| Annex B (997) | Highest downstream frequency (MHz) | 7.05 | 7.05 | 7.05 | 7.05 | 7.05 | 7.05 | N/A | N/A |
| | Highest upstream frequency (MHz) | 8.832 | 8.832 | 5.1 | 8.832 | 12 | 12 | N/A | N/A |
| Annex C | Highest downstream frequency (MHz) | 8.5 | 8.5 | 8.5 | 8.5 | 8.5 | 8.5 | 17.664 | 18.1 |
| | Highest upstream frequency (MHz) | 5.2 | 5.2 | 5.2 | 5.2 | 12 | 12 | 12 | 30 |

US 2006/198430 A1 discloses systems and methods for evaluating whether to transition operation of a DSL line from a current line profile to one or more target line profiles. The method further performs one or more tests to evaluate the feasibility of the current line profile and each of the target line profiles, and then transitions the state to operate the DSL line in the highest feasible profile available. Evaluation of the feasibility of staying in the current state or moving to one of the target states may be based on distributions of reported and estimated data distilled from the operational data collected on the DSL line.

WO 2005/057315 A2 discloses ontrolling margins in a DSL modem pair is based on collected operational data. The operational data is analyzed and at least one of the modems in the modem pair is instructed to use a margin-related parameter value to assist the modem pair in meeting a margin target, such as a margin limit imposed by a DSL standard or the like. A controller, such as a DSM Center, a 'smart' modem unit and/or a computer system can collect and analyze the operational data and generate one or more margin-related parameter values. The margin-related parameter value may be a PSD-related value, such as the MAXNOMPSD, MAXNOMATP or PSDMASK parameter used by various ADSL systems, and may be a shaped spectral mask and/or caps or limits on bit loading for use in transmissions between the modems. In some cases, preference bands can be imposed to direct modems to favor and/or avoid certain frequencies in the modem's usable band(s). The operational data may include historical data relating to prior performance of the modem pair and prior margin compliance. A distribution of margins also may be based on operational data and may be estimated as a function of data rate. Using the estimated margin distribution, a distribution of performance parameters also is calculated, including the probabilities of line outages and probabilities of one or more error parameters exceeding minimum levels. Data rates and/or performance-related parameters may be set on the basis of the estimated performance of the system using various margin settings and levels.

Document D5 (US2004255056 A1) describes a method for selecting a mode of operation for at least two modems is described. In step 326, for each of the favourable modes of operation, a performance index PI is calculated. The performance index PI might be calculated according to the formula: $PI = \alpha_d(DS - DS_{min}) + \alpha_u(US - US_{min})$. In the formula, DS and US denote the downstream and the upstream bit rate, DSmin and USmin denote the minimum downstream and the minimum upstream bit rate, and $\alpha_d$ and $\alpha_u$ denote arbitrary parameters.

And the parameters $\alpha_d$ and $\alpha_u$ denote weighting factors adapted for defining the relative weight of the terms (DS- DSmin) and (US-USmin). (See abstract of the D5, paragraph [0090]).

SUMMARY

To solve the problem of the selected operation profile being unsuitable for the line bandwidth and traffic, an embodiment of the invention provides a method and system for selecting an operation profile. The technical solution is as follows.

An embodiment of the invention provides a method for selecting an operation profile including:

   obtaining upstream and downstream line rates of a channel according to a handshake signal of an upstream unit and a downstream unit; and
   selecting the operation profile according to the upstream and the downstream line rates and a predetermined selection rule;

wherein the step of obtaining upstream and downstream line rates comprises:

   computing a signal to noise ratio ,SNR, of the channel;
   obtaining a coding gain according to a used code; and
   obtaining upstream and downstream line rates for profiles according to the SNR and the coding gain;
   wherein the step of computing an SNR of the channel comprises:

      computing electrical length of the channel according to reception level and transmission level of a handshake signal during handshake procedure of the upstream unit and the downstream unit;

      computing transfer function of the channel according to the electrical length;

      computing a transmission signal power spectral density ,PSD, according to various band plans and profiles supported by a user side device and an office-end device;

      obtaining a noise PSD according to a signal measurement background noise during a handshake procedure of the upstream unit and downstream unit; and

computing the SNR according to the transmission signal PSD, the transfer function of the channel and the noise PSD.

Another embodiment of the invention provides a system for selecting an operation profile including:

a channel information obtaining module adapted to obtain upstream and downstream line rates of a channel according to a handshake signal of an upstream unit and a downstream unit;
a profile selecting module adapted to select the operation profile according to the obtained upstream and the downstream line rates and a predetermined selection rule;

wherein the channel information obtaining module comprises:

an SNR computing unit adapted to compute SNR of the channel;

a coding gain obtaining unit adapted to obtain a coding gain according to a used code;

a line rate computing unit adapted to compute bit load that may be carried on each tone according to the SNR and the coding gain, and to compute upstream and downstream line rates according to the bit load that may be carried for whole frequency band;

wherein the SNR computation unit further comprises:

a channel transfer function obtaining unit adapted to estimate electrical length of the channel according to reception level and transmission level of a handshake signal during handshake procedure of the upstream unit and the downstream unit, and to compute transfer function of the channel according to the electrical length;

a noise PSD measuring unit adapted to compute a noise PSD according to a signal measurement background noise during a handshake procedure of the upstream unit and downstream unit;

a signal PSD computing unit adapted to compute a transmission signal PSD according to various band plans and profiles supported by a modem and an office-end; and

an SNR computing unit adapted to compute the SNR according to the transmission signal PSD, the noise PSD and the transfer function of the channel.

With the technical solutions provided by embodiments of the invention, the following advantages may be achieved that, after obtaining the channel information, an operation profile may be selected self-adaptively according to the actual channel condition and the optimal operation profile may be selected by training only once.

BRIEF DESCRIPTION OF THE DRAWING(S)

Figure 1a is a schematic view of the band plan for VDSL2 in North America in the prior art;
Figure 1b is a schematic view of the band plan for VDSL2 in Europe in the prior art;
Figure 1c is a schematic view of the band plan for VDSL2 in Japan in the prior art;
Figure 2 is a flow chart of a method for selecting an operation profile according to embodiment one of the invention;
Figure 3 is a flow chart of a method for selecting an operation profile according to embodiment two of the invention;
Figure 4 is an illustrative diagram showing the relationship between attenuation and frequency calculated from an estimated electrical length according to an embodiment of the invention;
Figure 5 is a diagram illustrating the relationship between the PSD Mask, the MIB PSD profile and the amateur radio band according to an embodiment of the invention;
Figure 6 illustrates a schematic view of a transmission PSD profile based on band plan according to an embodiment of the invention;
Figure 7 is a diagram illustrating the band plan according to an embodiment of the invention; and
Figure 8 is a schematic view of a system for selecting an operation profile according to an embodiment of the invention.

DETAILED DESCRIPTION

In the following, embodiments of the invention will be further described with reference to the drawings, which do not intend to limit the invention.

Embodiments of the invention provide a method and system for selecting an operation profile. The technical solution self-adaptively selects a profile according to the condition of a channel and preset parameters.

Embodiment one

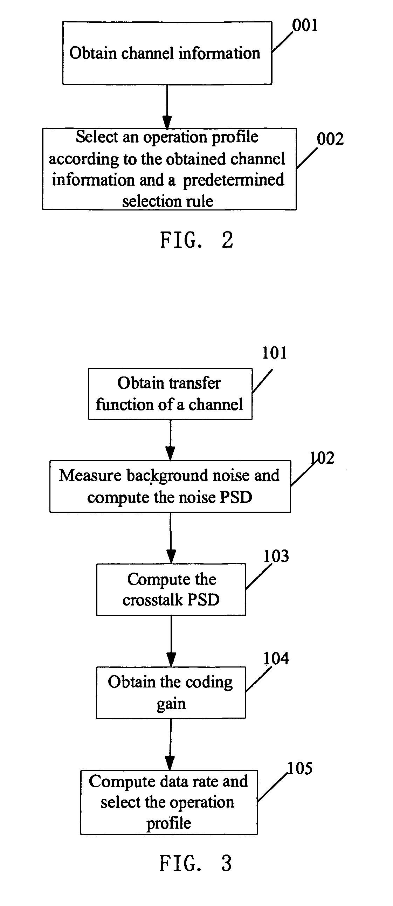

With reference to Fig. 2, a method for selecting an operation profile is shown, which includes the following steps:

Step 001: channel information of a channel is obtained.

This step involves the following steps:

(1) The electrical length of the channel is estimated according to the received level and transmission level of a set of handshake signals during handshake procedure of an upstream unit and a downstream unit, for example, by using an average algorithm or weighted algorithm.

(2) Attenuation value of the channel, i.e., the transfer function of the channel, over the whole band is calculated according to the electrical length.

(3) Noise PSD is measured according to the handshake signal during the handshake procedure of the upstream unit and downstream unit.

(4) The coding gain is obtained according to the used code.

(5) The transmission signal PSD is calculated according to the band plans and profiles supported by the user side device and the central office device.

(6) The signal to noise ratio (SNR) is calculated according to the transmission signal PSD and the noise PSD.

(7) The bit load that may be carried on each tone is calculated according to the SNR and the coding gain, and the upstream line rate and downstream line rate are calculated to according the bit load that may be carried for whole frequency band.

Step 002: an operation profile is selected according to the obtained channel information and a predetermined selection rule.

The corresponding selection rule may be selecting a profile allowing the maximum upstream line rate or the maximum downstream line rate or the maximum sum of the upstream line rate and downstream line rates.

Alternatively, the corresponding selection rule may be selecting a profile allowing the minimum total aggregate device transmission power or the maximum noise margin or the highest line stability.

Embodiment two

Selecting an operation profile for VDSL2 annex A 998 is taken as an example in the embodiment. There are totally six profiles, 8a, 8b, 8c, 8d, 12a and 12b. In the mentioned six profiles, only 12b dose not support US0 band. Hence in this sense, only the first five of the above six profiles are considered here. With reference to Fig. 3, selecting the operation profile includes the following steps.

Step 101: the transfer function $H(f)$ of a channel is obtained.

The attenuation of a set of G.hs tones may be computed by using the received levels of the tones and the transmission levels of the tones obtained from G.hs (Handshake procedures for VDSL) by a VTU-0 (Remote VDSL Terminal Unit-central office) and VTU-R (VDSL terminal unit-remote). The relationship curve between the attenuation values of a computed set of tones and the frequencies is used to fit a model curve so as to estimate the electrical length of the channel.

There are several tone sets used in handshake stage of VDSL2. Taking annex A as an example and with reference to Table 2, tones 9, 17 and 25 of A43 and tones 944, 972 and 999 of V43 are used for the upstream, tones 40, 56 and 64 of A43 and tones 257, 383 and 511 of V43 are used for the downstream. The electrical length (EL) of the channel can be estimated by comparing the actual attenuation values of these signals and the theoretical attenuation values derived from some theoretical DSL channel model, and the electrical length may be in turn used to estimate the transfer function $H(f)$ of the channel.

G.994.1-tone sets for 4.3125 kHz signal family

**Table 2**

| tone set name | Upstream tone set | | Downstream tone set | | Transmission mode |
|---|---|---|---|---|---|
| | Frequency index(N) | Maximum power level/ tone (dBm) | Frequency index (N) | Maximum power level/ tone (dBm) | |
| A43 (Notes 1, 3, 4) | 9 17 25 | -1.65 | 40 56 64 | -3.65 | duplex only |
| A43c (Notes 1, 3, 4) | 9 17 25 | -1.65 | 257 293 337 | -3.65 | duplex only |
| B43 | 37 45 53 | -1.65 | 72 88 96 | -3.65 | duplex only |
| B43c(Note 1) | 37 45 53 | -1.65 | 257 293 337 | -3.65 | duplex only |
| C43 | 7 9 | -1.65 | 12 14 64 | -3.65 | duplex only |
| J43 | 9 17 25 | -1.65 | 72 88 96 | -3.65 | duplex only |
| V43(Notes 1, 2) | 944 972 999 | -16.65 | 257 383 511 | -3.65 | duplex only |

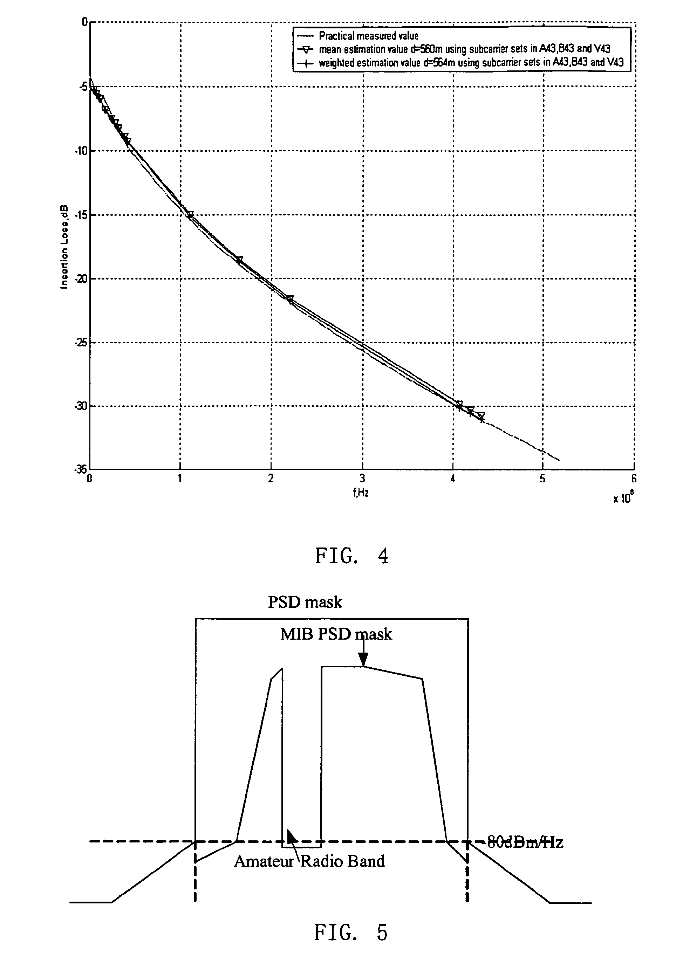

With reference to Fig.4, the transfer function $H(f)$ of the channel is computed from the estimated electrical length.

Here, practical measured value indicates the practically measured value of the attenuation function.

Mean estimation value indicates the value of the attenuation function calculated through estimating the electrical length using an average method. That is, the length is estimated by averaging the several lengths, after the length for each frequency point is estimated..

Weighted estimation value indicates the value of the attenuation function calculated through estimating the electrical length using a weighted average method. The length is estimated using different weights according to the frequencies. That is, after the length for each frequency point is estimated, the weighted average of the lengths is then calculated according to the weight of each frequency point.

It can be seen that the attenuation curve measured using a channel simulator for a diameter of 0.4m and length of 600m fits very well with the attenuation curve estimated according to the handshake tones.

Step 102: noise PSD is measured. The measured noise PSD includes a static noise PSD named *noise_PSD* ( noise PSD can also be measured beforehand) and a crosstalk noise PSD named *xtalk_PSD* (which indicates sum of a far-end crosstalk and a near-end crosstalk).

Step 104: the coding gain r is obtained according to the used code.

Step 105: the transmission signal PSD is computed under various band plans and profiles supported by the user side device and the central office device. SNR is then calculated according to the transmission signal PSD and noise PSD, then the upstream line rate and downstream line rate are calculated according to the SNR and coding gain. After that, the selecting policy is decided, which is such a policy that it selects a profile enabling the maximum upstream line rate, or the maximum downstream line rate, or the maximum sum of the upstream line rate and downstream line rate.

The detailed implementation may includes:

1) in the case that the band plan and the maximum upstream/downstream transmission power are specified, under the principle of meeting PSD mask requirement and ensuring the aggregate power in the passband being lower than the maximum upstream/downstream transmission power, the transmission signal PSD *signal_PSD* is measured,. Then SNR is calculated using Equation (1) according to the measured noise PSD (including the static noise PSD *noise_ PSD* and the crosstalk noise PSD *xtalk_PSD*). Then the bit load that may be carried on each tone is calculated using Equation (2), and the upstream/downstream line rates are calculated according to the bit load that can be carried for whole frequency band. Thereafter, the maximum upstream/downstream line rates are obtained according to the calculated upstream/downstream line rates. Here, the policy for selecting the profile is to have the maximum upstream line rate or the maximum downstream line rate or the maximum sum of the upstream line rate and downstream line rate. Currently, many operators limit the maximum upstream/downstream rates. In this case, when the calculated rates may meet the requirement of the supported operation profile, then the operation profile may be selected according to the principles of minimum device transmission power, maximum noise margin, maximum line stability etc.

$$SNR_i = \frac{signal\_PSD_i \bullet |H(f)|^2}{xtalk\_PSD_i + noise\_PSD} \qquad (1)$$

$$b_i = \log_2(1 + \frac{SNR_i}{\Gamma}), i = 1 \ldots k \qquad (2)$$

2) in the case that the band plan is not specified and several maximum transmission powers are allowed, the parameters of several band plans and profiles are computed. Considering the limit PSD mask of the band plan, MIB PSD mask and amateur radio band (the relationship between them is shown in Fig. 5), and under the principle of ensuring the aggregate power in the passband being lower than the maximum transmission power, the transmission signal PSD *signal_PSD* is determined, and then the upstream/downstream rates for the several profiles supported by the VDSL2 are respectively calculated using Equations (1) and (2) according to the measured noise PSD (including the static noise PSD *noise_PSD* and the crosstalk noise PSD *xtalk_PSD*). The calculated upstream/downstream rates for the several profiles are compared and a profile is selected allowing for the maximum upstream line rate or the maximum downstream line rate or the maximum sum of the upstream line rate and downstream line rate. Currently, many operators limit the maximum upstream/downstream rate. In this case, when the calculated rates meet the requirement of the supported operation profile, then the operation profile may be selected according to the principles of minimum device transmission power, maximum line noise margin, or maximum line stability etc.

Next, the above method will be explained by taking G 992.3 Annex a as an example.

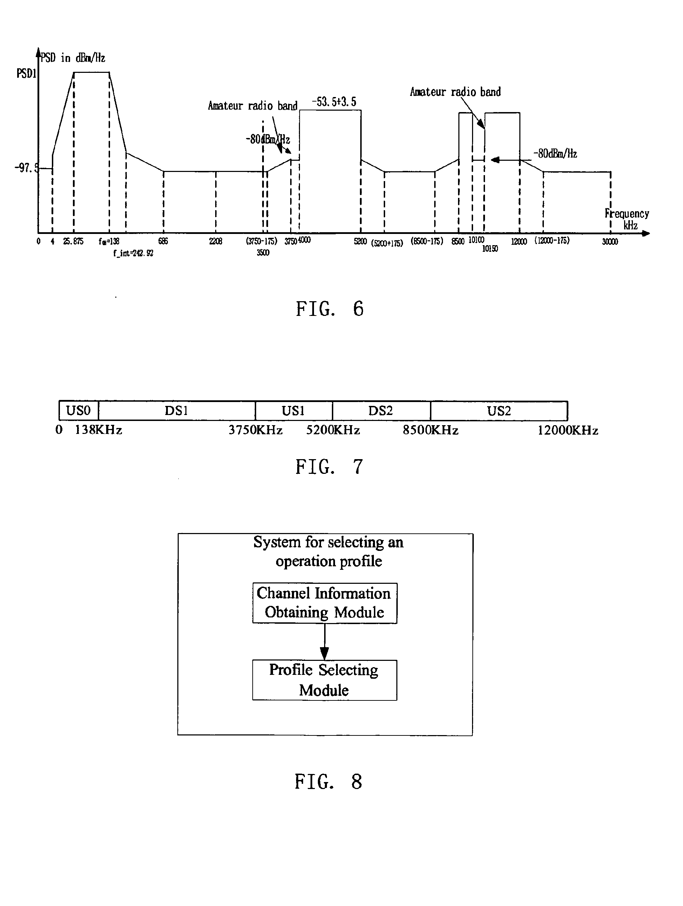

Fig. 6 illustrates the VDSL2 transmission PSD mask based on the band plan shown in Fig. 7. Table 3 shows the downstream PSD used for the profile of 12a in the example, and Table 4 shows the upstream PSD used for the profile of 12a in the example. The PSD values between the frequency points are obtained using an interpolation method. When the maximum aggregate upstream and downstream power is specified as 14.5dBm, the upstream/downstream line rates for Annex a 8d, 12a are calculated by using the above steps 101-105. At 500m, the obtained upstream rate for 8d is 44.565Mbps, the obtained downstream rate is 12.72Mbps, and the sum of the upstream rate and the downstream rate is 57.22Mbps; and the obtained upstream rate for 12a is 42.401Mbps, the obtained downstream rate is 27.294Mbps, and the sum of the upstream rate and the downstream rate is 69.695Mbps. Therefore, the profile of 12a is selected according to the above information.

**Table 3**

| Frequency (KHz) | PSD (dBm/Hz) |
|---|---|
| 0 | -97.5 |
| 4 | -97.5 |
| 4 | -92.5 |
| 4 | -92.5 |
| 80 | -72.5 |
| 138 | (-47.7-7.1) |
| 138 | (-40-7.1) |
| 1104 | (-40-7.1) |
| 1622 | (-50-7.1) |
| 3750 | (-53.5-7.1) |
| 3750 | -80 |
| (3750+175) | -100 |
| (5200-175) | -100 |

(continued)

| Frequency (KHz) | PSD (dBm/Hz) |
|---|---|
| 5200 | -80 |
| 5200 | (-55-7.1) |
| 8500 | (-55-7.1) |
| 8500 | -80 |
| (8500+175) | -100 |
| 30000 | -100 |

**Table 4**

| Frequency (KHz) | PSD (dBm/Hz) |
|---|---|
| 0 | -97.5 |
| 4 | -97.5 |
| 4 | -92.5 |
| 25.875 | (-38-1.5) |
| 138 | (-38-1.5) |
| 242.92 | -93.2 |
| 686 | -100 |
| 1104 | -100 |
| (3750-175) | -100 |
| 3750 | -80 |
| 3750 | (-53-1.5) |
| 5200 | (-53-1.5) |
| 5200 | -80 |
| (5200+175) | -100 |
| (8500-175) | -100 |
| 8500 | -80 |
| 8500 | (-54-1.5) |
| 12000 | (-54-1.5) |
| 12000 | -80 |
| (12000+175) | -100 |
| 30000 | -100 |

The method may also be applicable to VDSL2-compatible ADSL2+ annex A, ADSL2 annex A, ADSL2 annex L, and it may also used to select the profile for ADSL2+ annex B and ADSL2 annex B.

With reference to Fig. 8, an embodiment of the invention also provides a system for selecting an operation profile, including the following modules.

A channel information obtaining module is adapted to obtain channel information of a channel.

A profile selecting module is adapted to select an operation profile of the channel according to the obtained channel information and a predetermined selection rule.

Here the channel information obtaining module further includes:

An SNR computing unit adapted to compute SNR of the channel;

A coding gain obtaining unit adapted to obtain coding gain according to the used code;
A line rate computing unit adapted to calculate bit load that may be carried on each tone according to the SNR and the coding gain, and to compute an upstream/downstream line rate according to the bit load that may be carried for whole frequency band.

Herein, the SNR computing unit may further include:

A channel transfer function obtaining unit adapted to estimate electrical length of the channel according to received level and transmission level of a handshake signal during a handshake procedure, and to compute transfer function of the channel according to the electrical length;
A noise PSD measuring unit adapted to obtain noise PSD according to a signal measurement background noise during the handshake procedure;
A signal PSD computing unit adapted to compute transmission signal PSD according to various band plans and profiles supported by a modem and an office-end;
An SNR computing unit adapted to compute an SNR according to the transmission signal PSD and the noise PSD.

The selection rule used by the profile selecting module is to select a profile allowing for the maximum upstream line rate or the maximum downstream line rate or the maximum sum of the upstream line rate and downstream line rate. Alternatively, when the line rates meet the rate limit, the operation profile may be selected according to the principle of minimum device transmission power, or the maximum line noise margin or the maximum line stability.

In summary, the embodiments of the invention may obtain the channel information according to the handshake signal of the upstream unit and downstream unit, and may self-adaptively select the operation profile according to the actual channel condition. As a result, an optimal operation profile may be selected with just one training in the system, thereby ensuring the convenient and fast selecting of the operation profile most suitable for the current channel.

The above embodiment is only one of the detailed implementation of the invention. Any modification and replacement within the scope of the technical solution of the invention made by those skilled in the art is intended to fall within the invention.

## Claims

1. A method for selecting an operation profile **characterized by** comprising:

    obtaining upstream and downstream line rates of a channel (001) according to a handshake signal of an upstream unit and a downstream unit; and
    selecting the operation profile according to the upstream and the downstream line rates and a predetermined selection rule (002); wherein the step of obtaining upstream and downstream line rates comprises:

      computing a signal to noise ratio ,SNR, of the channel;
      obtaining a coding gain according to a used code; and
      obtaining the upstream and downstream line rates for profiles according to the SNR and the coding gain;
      wherein the step of computing an SNR of the channel comprises:

        computing electrical length of the channel according to reception level and transmission level of a handshake signal during handshake procedure of the upstream unit and the downstream unit;
        computing transfer function of the channel according to the electrical length;
        computing a transmission signal power spectral density, PSD, according to various band plans and profiles supported by a user side device and an office-end device;
        obtaining a noise PSD according to a signal measurement background noise during a handshake procedure of the upstream unit and downstream unit; and
        computing the SNR according to the transmission signal PSD, the transfer function of the channel and the noise PSD.

2. The method for selecting an operation profile of claim 1, wherein the electrical length is computed by using an average algorithm or a weighted average algorithm.

3. The method for selecting an operation profile of claim 1, wherein the predetermined selection rule comprises: selecting a profile allowing the maximum upstream line rate, or the maximum downstream line rate or the maximum of the sum of the upstream line rate and downstream line rate.

4. The method for selecting an operation profile of claim 1, wherein the predetermined selection rule comprises: selecting a profile allowing the minimum device transmission power, or the maximum line noise margin or the maximum line stability.

5. A system for selecting an operation profile **characterized by** comprising:

a channel information obtaining module adapted to obtain upstream and downstream line rates of a channel according to a handshake signal of an upstream unit and a downstream unit;
a profile selecting module adapted to select the operation profile according to the obtained upstream and the downstream line rates and a predetermined selection rule;
wherein the channel information obtaining module comprises:

an SNR computing unit adapted to compute SNR of the channel;
a coding gain obtaining unit adapted to obtain a coding gain according to a used code;
a line rate computing unit adapted to compute bit load that may be carried on each tone according to the SNR and the coding gain, and to compute the upstream and downstream line rates according to the bit load that may be carried for whole frequency band;
wherein the SNR computation unit further comprises:

a channel transfer function obtaining unit adapted to estimate electrical length of the channel according to reception level and transmission level of a handshake signal during handshake procedure of the upstream unit and the downstream unit, and to compute transfer function of the channel according to the electrical length;
a noise PSD measuring unit adapted to compute a noise PSD according to a signal measurement background noise during a handshake procedure of the upstream unit and downstream unit;
a signal PSD computing unit adapted to compute a transmission signal PSD according to various band plans and profiles supported by a modem and an office-end; and
an SNR computing unit adapted to compute the SNR according to the transmission signal PSD, the noise PSD and the transfer function of the channel.

6. The system for selecting an operation profile of claim 5, wherein the predetermined selection rule used by the profile selecting module comprises: selecting a profile allowing the maximum upstream line rate, or the maximum downstream line rate or the maximum sum of the upstream line rate and downstream line rate.

7. The system for selecting an operation profile of claim 5, wherein the predetermined selection rule used by the profile selecting module comprises: selecting a profile allowing the minimum device transmission power, or the maximum line noise margin or the maximum line stability.

**Patentansprüche**

1. Verfahren zum Auswählen eines Betriebsprofils, **gekennzeichnet durch** die folgenden Schritte:

Erhalten von Upstream- und Downstream-Leitungsraten eines Kanals (001) gemäß einem Handshake-Signal einer Upstream-Einheit und einer Downstream-Einheit; und Auswählen des Betriebsprofils gemäß den Upstream- und den Downstream-Leitungsraten und einer vorbestimmten Auswahlregel (002); wobei der Schritt des Erhaltens von Upstream- und Downstream-Leitungsraten Folgendes umfasst:

Berechnen eines Rauschabstands SNR des Kanals;
Erhalten eines Codierungsgewinns gemäß einem verwendeten Code; und
Erhalten der Upstream- und Downstream-Leitungsraten für Profile gemäß dem SNR und dem Codierungsgewinn;
wobei der Schritt des Berechnens eines SNR des Kanals Folgendes umfasst:

Berechnen von elektrischer Länge des Kanals gemäß Empfangspegel und Sendepegel eines Handshake-Signals während einer Handshake-Prozedur der Upstream-Einheit und der Downstream-Einheit;

Berechnen einer Übertragungsfunktion des Kanals gemäß der elektrischen Länge;

Berechnen einer Sendesignal-Leistungsspektraldichte bzw. -PSD gemäß verschiedenen Bandplänen und Profilen, die **durch** eine benutzerseitige Einrichtung und eine Einrichtung am Vermittlungsstellenende unterstützt werden;

Erhalten einer Rausch-PSD gemäß einem Signalmessungs-Hintergrundrauschen während einer Handshake-Prozedur der Upstream-Einheit und Downstream-Einheit; und

Berechnen des SNR gemäß der Sendesignal-PSD, der Übertragungsfunktion des Kanals und der Rausch-PSD.

2. Verfahren zum Auswählen eines Betriebsprofils nach Anspruch 1, wobei die elektrische Länge unter Verwendung eines Mittelwert-Algorithmus oder eines gewichteten Mittelwert-Algorithmus berechnet wird.

3. Verfahren zum Auswählen eines Betriebsprofils nach Anspruch 1, wobei die vorbestimmte Auswahlregel Folgendes umfasst: Auswählen eines Profils, das die maximale Upstream-Leitungsrate oder die maximale Downstream-Leitungsrate oder das Maximum der Summe der Upstream-Leitungsrate und der Downstream-Leitungsrate erlaubt.

4. Verfahren zum Auswählen eines Betriebsprofils nach Anspruch 1, wobei die vorbestimmte Auswahlregel Folgendes umfasst: Auswählen eines Profils, das die minimale Einrichtungssendeleistung oder die maximale Leitungsrauschreserve oder die maximale Leitungsstabilität erlaubt.

5. System zum Auswählen eines Betriebsprofils, **dadurch gekennzeichnet, dass** es Folgendes umfasst:

ein Modul zum Erhalten von Kanalinformationen, das dafür ausgelegt ist, Upstream- und Downstream-Leitungs-raten eines Kanals gemäß einem Handshake-Signal einer Upstream-Einheit und einer Downstream-Einheit zu erhalten;

ein Profilauswahlmodul, das dafür ausgelegt ist, das Betriebsprofil gemäß den erhaltenen Upstream- und den Downstream-Leitungsraten und einer vorbestimmten Auswahlregel auszuwählen;

wobei das Modul zum Erhalten von Kanalinformationen Folgendes umfasst:

eine SNR-Berechnungseinheit, die dafür ausgelegt ist, den SNR des Kanals zu berechnen;

eine Einheit zum Erhalten des Codierungsgewinns, die dafür ausgelegt ist, einen Codierungsgewinn gemäß einem verwendeten Code zu erhalten;

eine Leitungsraten-Berechnungseinheit, die dafür ausgelegt ist, die Bitlast, die auf jedem Ton gemäß dem SNR und dem Codierungsgewinn geführt werden kann, zu berechnen und die Upstream- und Downstream-Leitungsraten gemäß der Bitlast, die für das gesamte Frequenzband geführt werden kann, zu berechnen;

wobei die SNR-Berechnungseinheit ferner Folgendes umfasst:

eine Einheit zum Erhalten der Kanalübertragungsfunktion, die dafür ausgelegt ist, die elektrische Länge des Kanals gemäß Empfangspegel und Sendepegel eines Handshake-Signals während einer Handshake-Prozedur der Upstream-Einheit und der Downstream-Einheit zu schätzen und die Übertragungsfunktion des Kanals gemäß der elektrischen Länge zu berechnen;

eine Rausch-PSD-Messeinheit, die dafür ausgelegt ist, eine Rausch-PSD gemäß einem Signalmessungs-Hintergrundrauschen während einer Handshake-Prozedur der Upstream-Einheit und der Downstream-Einheit zu berechnen;

eine Signal-PSD-Berechnungseinheit, die dafür ausgelegt ist, eine Sendesignal-PSD gemäß verschiedenen Bandplänen und Profilen, die durch ein Modem und ein Vermittlungsstellenende unterstützt werden, zu berechnen; und

eine SNR-Berechnungseinheit, die dafür ausgelegt ist, den SNR gemäß der Sendesignal-PSD, der Rausch-PSD und der Übertragungsfunktion des Kanals zu berechnen.

6. System zum Auswählen eines Betriebsprofils nach Anspruch 5, wobei die von dem Profilauswahlmodul verwendete vorbestimmte Auswahlregel Folgendes umfasst:

Auswählen eines Profils, das die maximale Upstream-Leitungsrate oder die maximale Downstream-Leitungsrate oder das Maximum der Summe der Upstream-Leitungsrate und der Downstream-Leitungsrate erlaubt.

7. System zum Auswählen eines Betriebsprofils nach Anspruch 5, wobei die von dem Profilauswahlmodul verwendete vorbestimmte Auswahlregel Folgendes umfasst:

Auswählen eines Profils, das die minimale Einrichtungssendeleistung oder die maximale Leitungsrauschreserve oder die maximale Leitungsstabilität erlaubt.

**Revendications**

1. Procédé de sélection d'un profil de fonctionnement **caractérisé en ce qu'**il comprend :

la récupération de débits de ligne vers l'amont et vers l'aval d'un canal (001) en fonction d'un signal d'établissement de communication d'une unité en amont et d'une unité en aval, et
la sélection du profil de fonctionnement en fonction des débits de ligne vers l'amont et vers l'aval et d'une règle prédéfinie de sélection (002), l'étape de récupération des débits de ligne vers l'amont et vers l'aval comprenant :

le calcul du rapport signal sur bruit, SNR, du canal,
la récupération d'un gain de codage en fonction d'un code utilisé, et
la récupération des débits de ligne vers l'amont et vers l'aval pour des profils en fonction du rapport signal sur bruit SNR et du gain de codage,
dans lequel l'étape de calcul du rapport signal sur bruit SNR du canal comprend :

le calcul de la longueur électrique du canal en fonction du niveau de réception et du niveau d'émission d'un signal d'établissement de communication pendant une procédure d'établissement de communication de l'unité en amont et de l'unité en aval, le calcul de la fonction de transfert du canal en fonction de la longueur électrique,
le calcul d'une densité spectrale de puissance, PSD, du signal d'émission en fonction de divers plans et profils de bande pris en charge par un dispositif du côté utilisateur et par un dispositif du côté central,
la récupération d'une densité spectrale de puissance PSD de bruit en fonction du bruit de fond d'une mesure de signal pendant une procédure d'établissement de communication de l'unité en amont et de l'unité en aval, et
le calcul du rapport signal sur bruit SNR en fonction de la densité spectrale de puissance PSD du signal d'émission, de la fonction de transfert du canal et de la densité spectrale de puissance PSD de bruit.

2. Procédé de sélection d'un profil de fonctionnement selon la revendication 1, dans lequel la longueur électrique est calculée en utilisant un algorithme de calcul de moyenne ou un algorithme de calcul de moyenne pondérée.

3. Procédé de sélection d'un profil de fonctionnement selon la revendication 1, dans lequel la règle prédéfinie de sélection comprend : la sélection d'un profil permettant le débit de ligne maximal vers l'amont ou le débit de ligne maximal vers l'aval, ou le maximum de la somme du débit de ligne vers l'amont et du débit de ligne vers l'aval.

4. Procédé de sélection d'un profil de fonctionnement selon la revendication 1, dans lequel la règle prédéfinie de sélection comprend : la sélection d'un profil autorisant la puissance minimale d'émission du dispositif ou la marge maximale de bruit de ligne ou la stabilité maximale de ligne.

5. Système de sélection d'un profil de fonctionnement, **caractérisé en ce qu'**il comprend :

un module de récupération d'informations de canal conçu pour récupérer les débits de ligne vers l'amont et vers l'aval d'un canal en fonction d'un signal d'établissement de communication d'une unité en amont et d'une unité en aval,
un module de sélection de profil conçu pour sélectionner le profil de fonctionnement en fonction des débits de ligne vers l'amont et vers l'aval obtenus et d'une règle prédéfinie de sélection,
dans lequel le module de récupération d'informations de canal comprend :

une unité de calcul du rapport signal sur bruit SNR conçue pour calculer le rapport signal sur bruit SNR du canal,
une unité de récupération de gain de codage conçue pour récupérer un gain de codage en fonction d'un code utilisé,
une unité de calcul de débit de ligne conçue pour calculer une charge binaire qui peut être transportée sur chaque tonalité en fonction du rapport signal sur bruit SNR et du gain de codage, ainsi que pour calculer les débits de ligne vers l'amont et vers l'aval en fonction de la charge binaire qui peut être transportée pour la totalité de la bande de fréquences,
dans lequel l'unité de calcul de rapport signal sur bruit SNR comprend en outre :

une unité de récupération de fonction de transfert de canal conçue pour estimer la longueur électrique du canal en fonction du niveau de réception et du niveau d'émission d'un signal d'établissement de communication pendant une procédure d'établissement de communication de l'unité en amont et de l'unité en aval, ainsi que pour calculer la fonction de transfert du canal en fonction de la longueur électrique,
une unité de mesure de densité spectrale de puissance PSD de bruit conçue pour mesurer une densité spectrale de puissance PSD de bruit en fonction du bruit de fond d'une mesure de signal pendant une procédure d'établissement de communication de l'unité en amont et de l'unité en aval,
une unité de calcul de densité spectrale de puissance PSD de signal conçue pour calculer la densité spectrale de puissance PSD du signal d'émission en fonction de divers plans et profils de bande pris en charge par un modem et un dispositif central, et
une unité de calcul de rapport signal sur bruit SNR conçue pour calculer le rapport signal sur bruit SNR en fonction de la densité spectrale de puissance PSD du signal d'émission, de la densité spectrale de puissance PSD de bruit et de la fonction de transfert du canal.

6. Système de sélection d'un profil de fonctionnement selon la revendication 5, dans lequel la règle prédéfinie de sélection utilisée par le module de sélection de profil comprend : la sélection d'un profil autorisant le débit maximal de ligne vers l'amont ou le débit maximal de ligne vers l'aval ou la somme maximale du débit de ligne vers l'amont et du débit de ligne vers l'aval.

7. Système de sélection d'un profil de fonctionnement selon la revendication 5, dans lequel la règle prédéfinie de sélection utilisée par le module de sélection de profil comprend : la sélection d'un profil autorisant la puissance minimale d'émission du dispositif ou la marge maximale de bruit de ligne ou la stabilité maximale de ligne.

| US0 |  | DS1 | US1 | DS2 | US2 |
|---|---|---|---|---|---|

$f_{0L}$  $f_{0H}$  $f_1$           3.75              5.2              8.5              12

G.993.2 annex A band plan (998) (North America)

FIG. 1a

| Band plan | Frequency points in band | | | | | |
|---|---|---|---|---|---|---|
| | $f_0$ | $f_1$ | $f_2$ | $f_3$ | $f_4$ | $f_5$ |
| | kHz | kHz | kHz | kHz | kHz | kHz |
| 997 | 25 | 138 | 3000 | 5100 | 7050 | 12000 |
| | 25 | 276 | | | | |
| 998 | 25 | 138 | 3750 | 5200 | 8500 | 12000 |
| | 25 | 276 | | | | |
| | 120 | 276 | | | | |
| | N/A | 138 | | | | |

G.993.2 annex B band plan (Europe)

FIG. 1b

| US0 | DS1 | US1 | DS2 | US2 | DS3 | US3 |
|---|---|---|---|---|---|---|

0.025MHz              3.75        5.2              8.5      12              18.1              30

G.993.2 annex C band plan(Japan)

FIG. 1c

Obtain channel information — 001

Select an operation profile according to the obtained channel information and a predetermined selection rule — 002

FIG. 2

Obtain transfer function of a channel — 101

Measure background noise and compute the noise PSD — 102

Compute the crosstalk PSD — 103

Obtain the coding gain — 104

Compute data rate and select the operation profile — 105

FIG. 3

FIG. 4

FIG. 5

FIG. 6

| US0 | DS1 | US1 | DS2 | US2 |
|-----|-----|-----|-----|-----|

0    138KHz                    3750KHz    5200KHz         8500KHz            12000KHz

FIG. 7

FIG. 8

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2006198430 A1
- WO 2005057315 A2
- US 2004255056 A1